Europäisches Patentamt

European Patent Office

Office européen des brevets

(19)

(11) Numéro de publication: **0 047 210**
**B1**

(12) **FASCICULE DE BREVET EUROPEEN**

(45) Date de publication du fascicule du brevet:
**24.10.84**

(21) Numéro de dépôt: **81401349.6**

(22) Date de dépôt: **27.08.81**

(51) Int. Cl.³: **B 60 B 33/06**, B 62 B 5/04

(54) **Dispositif de roulettes escamotables, et appareil muni d'un tel dispositif.**

(30) Priorité: **29.08.80 FR 8018775**

(43) Date de publication de la demande:
**10.03.82 Bulletin 82/10**

(45) Mention de la délivrance du brevet:
**24.10.84 Bulletin 84/43**

(84) Etats contractants désignés:
**BE DE FR GB**

(56) Documents cités:
**DE - C - 230 886**
**FR - A - 2 235 849**
**FR - A - 2 235 850**
**GB - A - 995 647**
**GB - A - 1 165 341**
**GB - A - 1 232 144**

(73) Titulaire: **THOMSON-BRANDT, 173, Boulevard Haussmann, F-75379 Paris Cedex 08 (FR)**

(72) Inventeur: **Buclet, Pierre, THOMSON-CSF SCPI 173, bld Haussmann, F-75360 Paris Cedex 08 (FR)**
Inventeur: **Sothier, Christian, THOMSON-CSF SCPI 173, bld Haussmann, F-75360 Paris Cedex 08 (FR)**

(74) Mandataire: **Phan, Chi Quy et al, THOMSON-CSF SCPI 173, Bld Haussmann, F-75379 Paris Cedex 08 (FR)**

## Description

La présente invention a pour objet un dispositif de roulettes escamotables, monté au dessous d'un appareil ou meuble pour le rendre facilement déplaçable au moment choisi et un appareil tel qu'une machine à laver le linge ou la vaisselle munie d'un tel dispositif.

Un appareil tel qu'une machine à laver le linge ou la vaisselle est souvent lourd et difficilement déplaçable.

Pour faciliter son déplacement plusieurs solutions connues ont été proposées. Les unes, consistent à munir cet appareil de roulettes fixes et les autres à le pourvoir de roulettes escamotables. Les appareils munis de roulettes fixes ont l'inconvénient de se déplacer parfois tous seuls au cours de leur fonctionnement tandis que les appareils à reoulettes escamotables connus sont souvent onéreux. En effet dans ces appareils connus, le système d'escamotage de roulettes a généralement une structure compliquée entraînant dans leur fabrication soit une utilisation d'une quantité relativement grande de matières premières soit un temps relativement élevé de main d'œuvre.

Les dispositifs de roulettes escamotables connus tels que celui décrit dans le publication FR-A-2 235 849 sond souvent constitués par un ensemble ou chariot comprenant une première pièce portant quatre roulettes libres en rotation et une deuxième pièce relativement grande et sur laquelle est montée articulée la première pièce. Cette deuxième pièce sert de pièce intermédiaire de liaison entre ce chariot et le bâti d'un appareil. Dans cet ensemble est monté un levier pivotant qui permet de déplacer horizontalement la première pièce munie de roulettes par rapport au bâti de l'appareil dans une direction pour escamoter ces roulettes et laisser l'appareil reposé sur ses pieds fixes et dans une direction opposée pour faire sortir ces roulettes et forcer l'appareil à se reposer uniquement sur ces dernières.

Dans cette structure non seulement la deuxième pièce ou pièce intermédiaire relativement grande exige dans sa fabrication une utilisation d'une quantité relativement grande de matière première mais les premières et deuxièmes pièces reliées ensemble par des biellettes articulées autour des axes montés sur leurs deux extrémités nécessitent également un temps de montage relativement grand.

La présente invention ayant pour but d'éviter ces inconvénients permet de réaliser un dispositif solide efficace de roulettes escamotables ayant une structure légère, facilement et rapidement montable à la partie du dessous du bâti d'un appareil et un appareil ménager économique équipé d'un tel dispositif qui le rend facilement déplaçable au moment voulu.

Selon l'invention, un dispositif de roulettes escamotables, ayant un chariot mobile portant des roulettes, destiné à être monté au-dessous d'un appareil au moyen de supports articulés et assurant lors de son déplacement dans une direction sous la commande d'un levier pivotant, un escamotage de ces roulettes pour laisser l'appareil reposer sur ses pieds fixes et dans une direction opposée, une sortie de ces roulettes pour soutenir l'appareil par ces dernières roulettes est principalement caractérisé en ce qu'il comprend des supports ayant, à leurs extrémités opposées à celles articulées sur le chariot portant des roulettes, des saillies permettant, dans une liaison articulée et directe de ce chariot au bâti de l'appareil un montage pivotant de ces supports par simple accrochage dans des ouvertures coopérantes formées dans le bâti de l'appareil.

Pour mieux faire comprendre l'invention, on décrit ci-après un certain nombre d'exemples de réalisation, illustrés par des dessins ci-annexés dont:

- la figure 1 représente une vue latérale schématique d'un appareil ménager équipé d'un dispositif de roulettes escamotables suivant l'invention,

- la figure 2 représente à un autre échelle une vue partielle et schématique de l'appareil de la figure 1, montrant un dispositif de roulettes escamotables selon un premier exemple de réalisation de l'invention,

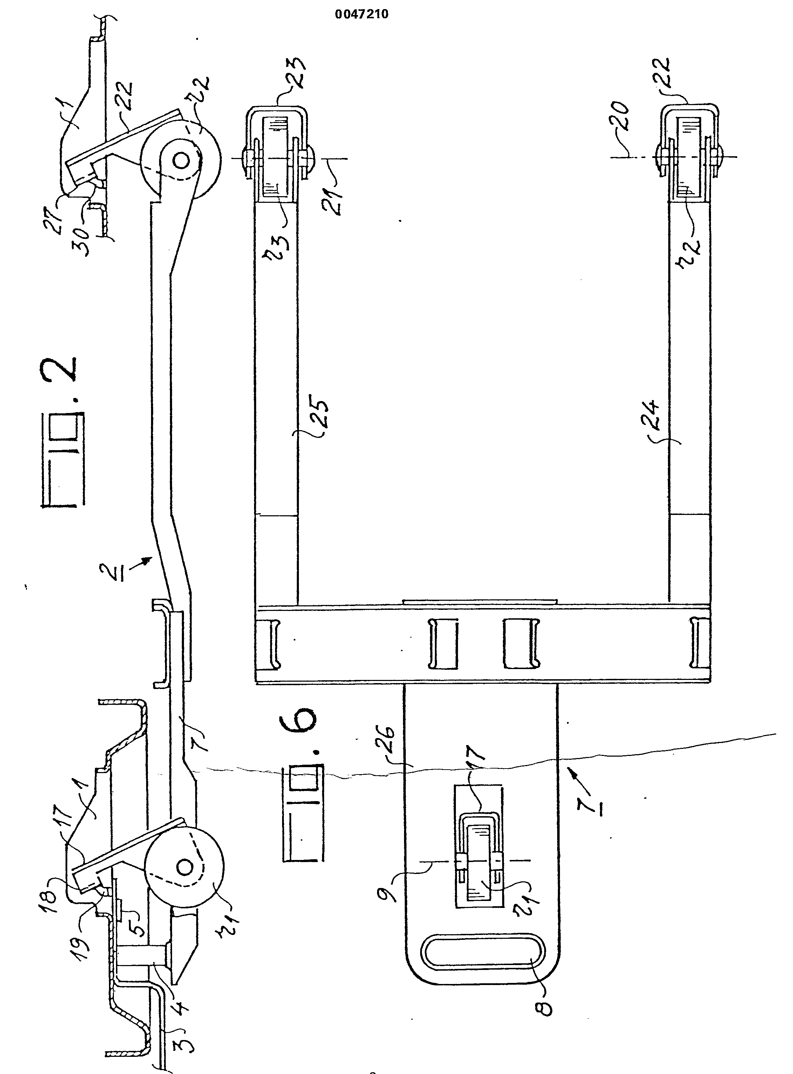

- les figures 3 et 4 représentent schématiquement en élévation et en vue de dessus, un dispositif de roulettes escamotables selon un deuxième exemple de réalisation de l'invention,

- la figure 5 représente une vue partielle schématique, en élévation de l'appareil de la figure 1, montrant le dispositif de roulettes escamotables illustré schématiquement dans les figures 3 et 4,

- la figure 6 représente une vue partielle de dessus du chariot mobile du dispositif de roulettes de la figure 2,

- les figures 7 à 11 montrent une partie du bâti de l'appareil de la figure 1 et des roulettes du dispositif de la figure 2 et celles de derrière de la figure 5 et leurs chapes pivotantes dans leurs différentes positions, dans leur montage et dans leur fonctionnement,

- la figure 12 représente une vue partielle en perspective du bâti de l'appareil de la figure 1, et de la partie arrière des dispositifs de roulettes escamotables des figures 2 et 5,

- la figure 13 représente une vue partielle et schématique du bâti de l'appareil de la figure 1 et d'une chape d'une roulette du dispositif des figures 2 et 5,

- la figure 14 représente une vue partielle du dispositif de roulettes escamotables de la figure 2 montrant un levier de commande de ce dernier dispositif, et

- la figure 15 représente une vue partielle de la partie avant du dispositif de roulettes escamotables de la figure 5.

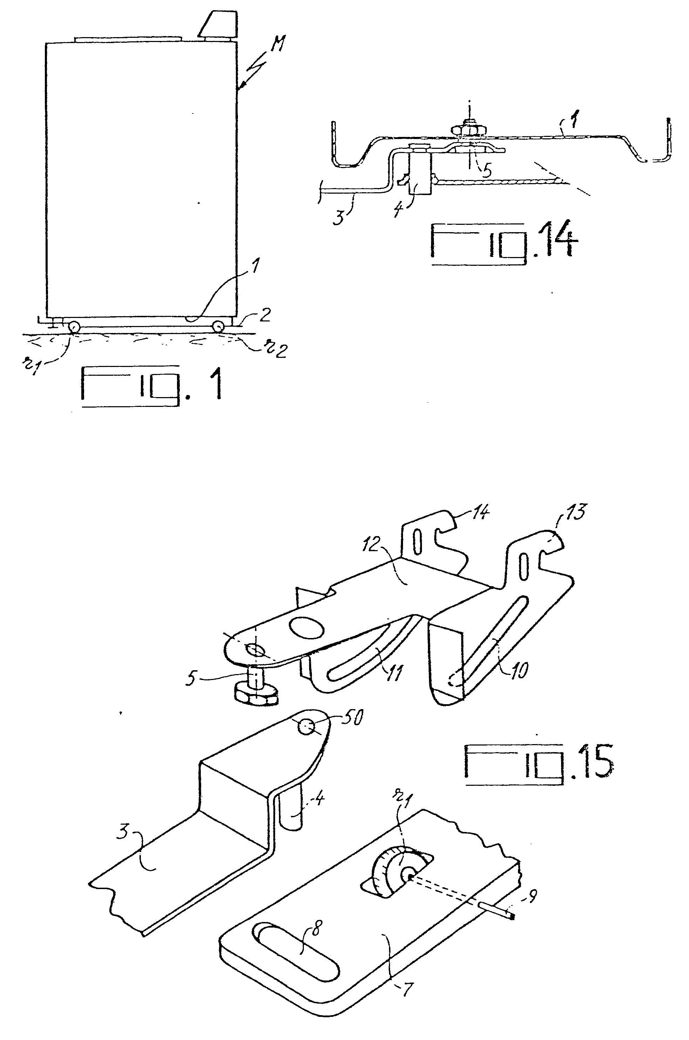

Un appareil ménager M réalisé selon l'invention et illustré schématiquement dans la figure 1 comprend un bâti 1 au dessous duquel est monté un dispositif de roulettes escamotables 2. L'appareil M repose normalement sur ses pieds rigides fixes dans son emplacement de rangement ou son lieu de travail. Durant son déplacement les roulettes du dispositif 2 sont sorties de leurs positions escamotées et l'appareil est alors supporté par ces roulettes.

Le dispositif de roulettes 2 selon une forme de réalisation préférée, comprend trois roulettes dont l'une $r_1$ se trouve dans la partie avant et les deux autres $r_2$ et $r_3$ sont disposées dans la partie arrière. Les trois roulettes $r_1$, $r_2$, $r_3$ sont montées libres en rotation sur un chariot 7 ayant une forme générale en Y (figure 6).

Les deux branches du Y du chariot 7 portent à leurs extrémitées les deux roulettes arrières $r_2$, $r_3$ tandis que le corps Y de ce chariot 7 maintient la roulette avant $r_1$.

Selon une caractéristique importante de l'invention le chariot 7 muni de roulettes $r_1$, $r_2$, $r_3$ est relié, articulé directement au bâti 1 au moyen de supports dont l'une de leurs extrémités pivote autour de l'axe de la roulette correspondante et l'autre porte des saillies ou oreilles latérales montées par simple accrochage dans des encoches ou ouvertures préalablement formées dans le bâti 1. Grâce au pivotement de ces supports, le chariot 7 est déplaçable d'avant en arrière et vice versa par rapport au bâti 1.

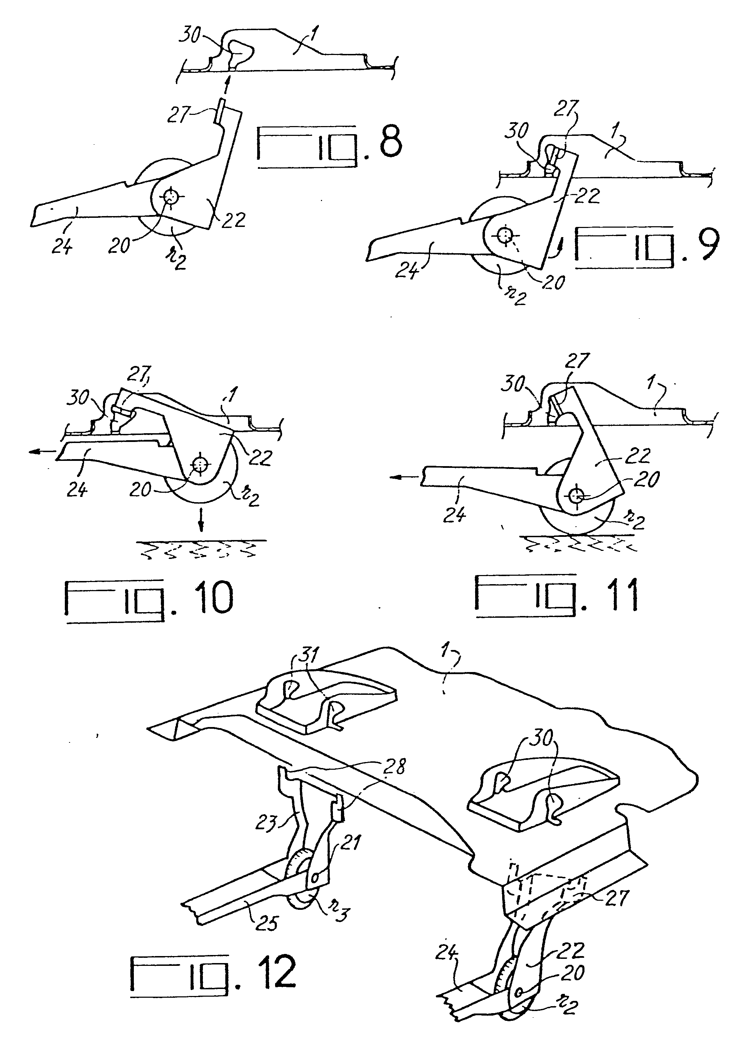

Dans un exemple de réalisation illustré dans les figures 2 et 6, le dispositif de roulettes escamotables 2 comprend un chariot 7 ayant une forme générale en Y dont les branches 24 et 25 portent à leurs extrémités des roulettes arrières $r_2$, $r_3$, et le corps 26 maintient la roulette avant $r_1$. Le chariot 7 est directement relié au bâti 1 par trois supports pivotants 17, 22, 23. Les supports pivotants 17, 22, 23 constitués en tôle emboutie pliée, ont des dimensions identiques et une même forme générale d'une chape dont l'une des extrémités comprend des joues parallèles espacées et munies d'ouvertures ou trous de pivotement alignés qui sont destinés à être enfilés sur l'axe de la roulette correspondante 9 ou 20 ou 21, et l'autre extrémité porte deux saillies latéralement opposées ou oreilles plates 18 ou 27 ou 28 (figure 12) qui sont destinées à être accrochées dans des encoches 19 ou 30 ou 31, préalablement formées dans le bâti 1. Dans le bâti sont découpées des ouvertures de dégagement pour le montage des supports pivotants 17, 22, 23. Ces ouvertures de dégagement sont munies de bords relevés, opposés et parallèles dans lesquels sont formées ces encoches ou ouvertures de pivotement 19, 30, 31 pour recevoir respectivement les oreilles plates 18, 27, 28 de ces supports pivotants 17, 22, 23.

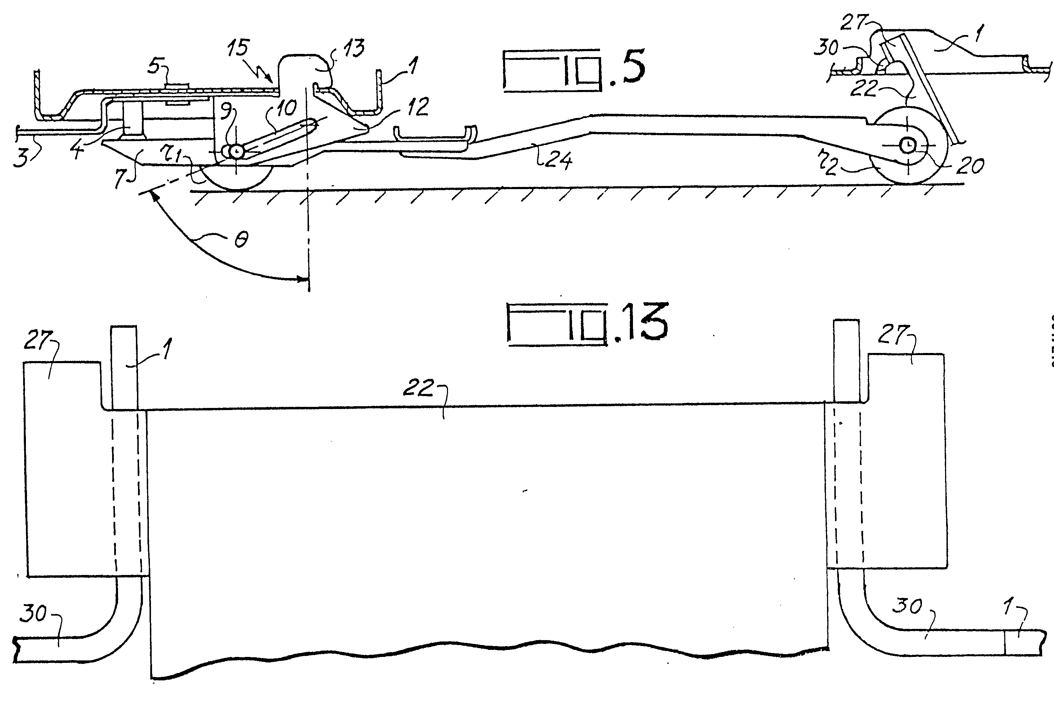

Les entrées de ces encoches 19, 30, 31 sont relativement longues et formées avec un changement de directions et une largeur prédéterminés autorisant un montage par glissement de ces supports 17, 22, 23 suivant la direction d'une seule de leurs positions indiquée comme un exemple dans les figures 7, 8 et 9. Cette position de montage n'est confondue avec aucune autre position de ces supports durant le fonctionnement ou le repos du chariot mobile 7. Cette position de montage est indiquée dans la figure 7 par des lignes mixtes en 32 représentant la forme d'une oreille 27 du support 22.

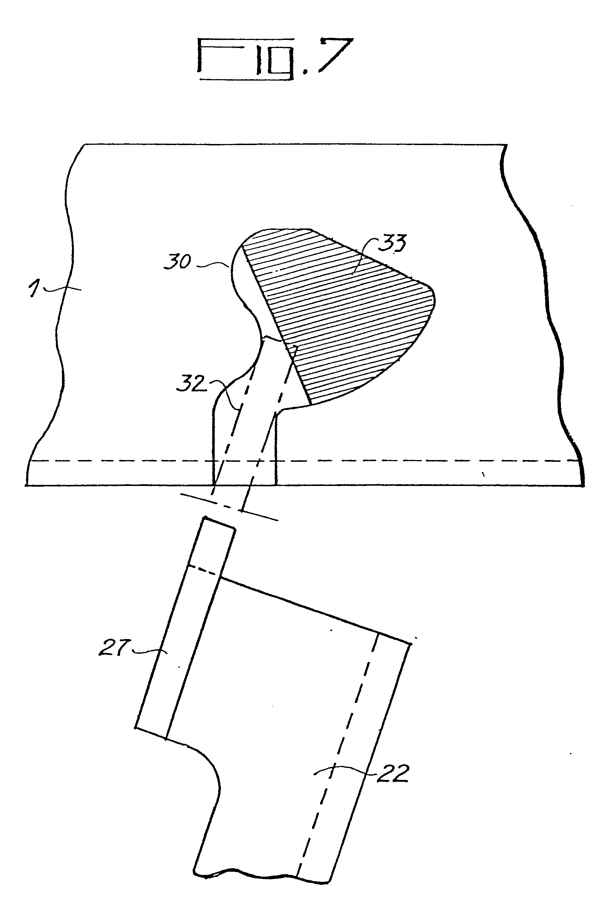

Une zone 33 occupée par les autres positions (figure 9 à 11) de cette oreille 27 dans l'encoche ou l'ouverture de pivotement 30 durant le fonctionnement du dispositif de roulettes 2 et le repos en position escamotée de la roulette $r_2$ du chariot 7, est indiquée par des hachures. Dans cette structure, durant le fonctionnement du dispositif de roulettes 2 ou le repos du chariot 7 avec ses roulettes en position escamotée, les oreilles plates 18, 27, 28 sont prisonnières des encoches 19, 30, 31, et les supports 17, 22, 23, pivotant dans ces encoches ne peuvent quitter le bâti 1 (figure 2). Pour séparer les supports, du bâti 1 de l'appareil M dans le cas d'un démontage du chariot mobile 7, il faut mettre d'abord les oreilles plates 18, 27, 28 de ces supports dans la position indiquée en 32 de la figure 7 pour pouvoir les retirer des encoches 19, 30, 31.

Le mouvement du chariot mobile 7 est commandé par un levier 3 monté pivotant horizontalement autour d'un axe verticale 5 rendu solidaire du bâti 1 de l'appareil M (figures 1 et 14). Ce levier 3 ayant par rapport à cet axe de pivotement 5 d'un côté un petit bras, et de l'autre côté un grand bras comprend dans l'extrémité de son petit bras un doigt 4 parallèle à l'axe 5. Le doigt 4 du levier 3 coopère avec un trou allongé 8 formé transversalement (figure 6) dans l'extrémité du corps 26 du chariot 7 en forme de Y pour déplacer le chariot mobile 7 soit vers l'arrière en vue de mettre les roulettes dans leurs positions escamotées (figure 10) soit vers l'avant en vue de sortir ces roulettes et les mettre en mesure de supporter l'appareil M et de le faciliter dans son déplacement.

Dans le premier exemple illustré dans la figure 2, le montage du dispositif de roulettes escamotables au-dessous de l'appareil M consiste à accrocher simplement les oreilles 18, 27, 28 des supports pivotants 17, 22, 23 du chariot mobile 7 dans les encoches 19, 30, 31 du bâti 1 et à monter le levier de commande 3 en fixant son axe de pivotement 5 au bâti 1. Cette simplicité d'assemblage du dispositif 2 permet de réduire au minimum le temps de main d'œuvre consacré au montage. La simplicité de structure du dispositif 2 permet également de réduire d'une manière appréciable la quantité de matières premières utilisée dans sa fabrication par rapport aux dispositifs de roulettes escamotables connus qui comprennent en plus du chariot mobile, un grand châssis fixe.

Dans un deuxième exemple de réalisation un dispositif de roulettes escamotables 2 comprend également un chariot mobile 7 ayant la forme d'un Y portant des roulettes $r_1$, $r_2$, $r_3$. Le chariot 7 est relié au bâti 1 dans sa partie arrière au moyen de deux supports pivotants 22, 23 accrochés dans des encoches 30, 31, du bâti 1, d'une manière identique à ceux du premier exemple, et dans sa partie avant par un support fixe 12 qui remplace le support pivotant 17 de ce premier exemple.

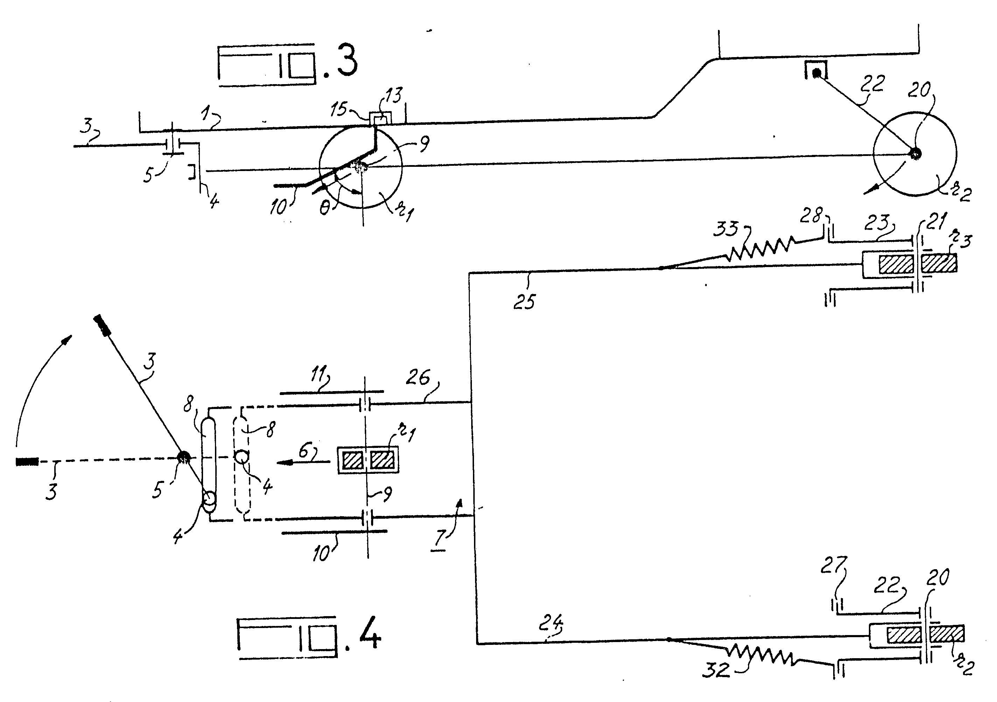

Le support fixe 12 réalisé en tôle emboutie, pliée comprend (figures 5 et 15) à l'une de ses extrémités deux parois latérales munies d'ouvertures inclinées constituant deux rampes parallèles 10, 11, inclinées par rapport à la verticale d'un angle téta et àl'extrémité opposée, deux saillies 13, 14 en forme de crochets et dans son corps un trou pour le passage d'un axe de pivotement 5 d'un levier de commande 3. Le support fixe 12 est fixé au bâti 1 par accrochage des saillies 13 et 14 dans des ouvertures 15 et 16 préalablement formées dans le bâti 1. L'immobilisation en position du support fixe 12 est assurée par un dispositif qui sert à la fois d'axe de pivotement 5 du levier de commande 3 et d'une vis d'immobilisation. Les rampes inclinées 10, 11 reçoivent les extrémités de l'axe 9 de la roulette avant $r_1$ et guident leur déplacement suivant cet angle téta par rapport à la verticale.

En fonctionnement, le relevage de l'appareil M sur ses roulettes est commandé par le levier 3 qui agit, en pivotant autour de l'axe 5 et au moyen du doigt 4 se déplaçant dans le trou allongé 8, sur le chariot 7 et provoque son déplacement suivant la flèche 6 (figure 4).

L'axe 5 étant fixé au bâti 1 de l'appareil M, le déplacement dans un plan horizontal du levier 3 entraîne, dans le cas du deuxième exemple illustré dans la figure 5 le déplacement du chariot 7 suivant les rampes inclinées 10, 11 qui font un angle téta avec une verticale, ce chariot 7 entraînant dans son déplacement le pivotement des supports 22, 23 et le déplacement des roulettes arrières $r_2$, $r_3$ (figures 10 et 11) la composante verticale du déplacement des roulettes $r_2$, $r_3$ étant égale à la composante verticale du déplacement de la roulette $r_1$. La figure 11 montre la roulette $r_2$ en contact avec le sol, l'appareil M étant alors élevé sur les roulettes en action $r_1$, $r_2$, $r_3$, alors que la figure 10 représente la roulette $r_2$ escamotée, l'appareil M étant alors reposé sur ses pieds fixes non représentés.

Dans le cas du premier exemple, le déplacement du levier de commande 3 entraîne le déplacement du chariot 7 qui provoque le pivotement des trois supports 17, 22, 23 et le déplacement des trois roulettes $r_1$, $r_2$, $r_3$, les composantes verticales de déplacement de ces trois roulettes étant identiques.

Des ressorts 32 et 33 (figure 4) peuvent être montées entre les branches du Y du chariot 7 et le bâti 1 de l'appareil M pour assurer un rappel du chariot 7 vers l'arrière et par conséquent des roulettes $r_1$, $r_2$, $r_3$ dans leurs positions escamotées.

La structure perfectionnée du dispositif de roulettes escamotables apportée par l'invention présente ainsi de grands avantages par rapport à celle des dispositifs de roulettes escamotables connus rappelés dans un paragraphe précédent, par une suppression dans ces dispositifs de leur châssis fixe, pièce intermédiaire relativement lourd assurant une liaison entre un chariot mobile portant des roulettes et le bâti de l'appareil (M), et par une simplification du mode de liaison pivotante entraînant une forte réduction du temps de fabrication. Le dispositif de roulettes escamotables réalisé selon l'invention est solide, efficace, léger, facilement montable, ce qui rend économique un appareil ménager équipé d'un tel dispositif de roulettes escamotables.

**Revendications**

1. Dispositif de roulettes escamotables, ayant un achariot mobile (7) portant des roulettes, destiné à être monté au-dessous d'un appareil (M) au moyen de supports articulés et assurant lors de son déplacement dans une direction sous la commande d'un levier pivotant (3), un escamotage de ces roulettes pour laisser l'appareil (M) reposer sur ses pieds fixes et dans une direction opposée, une sortie de ces roulettes pour soutenir l'appareil (M) par ces dernières roulettes, caractérisé en ce qu'il comprend des supports (17, 22, 23) ayant à leurs extrémités opposées à celles articulées sur le chariot portant des roulettes (7) des saillies (18, 27, 28) permettant, dans une liaison articulée et directe de ce chariot (7) au bâti (1) de l'appareil (M), un montage pivotant de ces supports par simple accrochage dans des ouvertures coopérantes (19, 30, 31) formées dans le bâti (1) de l'appareil (M).

2. Dispositif selon la revendication 1, caractérisé en ce qu'il comprend des supports (17, 22, 23) ayant une forme d'une chape dont les saillies ou oreilles latérales (18, 27, 28) de l'une des extrémités permettent un montage pivotant par simple accrochage dans des encoches coopérantes (19, 30, 31) du bâti (1), et dont les trous alignés de l'autre extrémité permettent un montage pivotant par enfilement sur l'axe de la roulette correspondante, portée par le chariot mobile (7).

3. Dispositif selon l'une des revendications 1 et 2, caractérisé en ce qu'il comprend un chariot mobile (7) muni de trois roulettes ($r_1$, $r_2$, $r_3$) dont l'une ($r_1$) est à l'avant et les deux autres ($r_2$, $r_3$) sont à l'arrière, et trois supports (17, 22, 23) assurant une liaison directe et pivotante de ce chariot (7) au bâti (1) de l'appareil (M).

4. Dispositif selon la revendication 2, caractérisé en ce qu'il comprend des supports (17, 22, 23) ayant des saillies ou oreilles latérales (18, 27, 28) plates et destinées à coopérer avec des encoches (19, 30, 31) munies respectivement d'une longue entrée formée dans le bâti (1) avec un changement de direction et une largeur prédéterminés, autorisant un montage de ces supports suivant la direction d'une de leurs positions prédéterminée.

5. Dispositif selon l'une des revendications 1 et 3, caractérisé en ce qu'il comprend un chariot mobile (7) ayant la forme d'un Y dont le corps (26) porte une roulette avant ($r_1$) et les deux branches portent deux roulettes arrières ($r_2$, $r_3$).

6. Dispositif selon la revendication 1, modifiée en ce que dans une liaison directe du chariot (7) au bâti (1) de l'appareil (M), l'un (17) des supports à montage articulé (17, 22, 23) est remplacé par un support fixe (12) à rampes inclinées.

7. Dispositif selon la revendication 6, caractérisé en ce qu'il comprend un support fixe (12) ayant à l'une de ses extrémités deux parois latérales munies de rampes (10, 11) inclinées d'un angle téta par rapport à la verticale, destinées à recevoir les extrémités de l'axe (9) de la roulette avant ($r_1$) et guider leur déplacement suivant cet angle téta, et à l'extrémité opposée, deux saillies (13, 14) en forme de crochets permettant, par leur accrochage dans des ouvertures coopérantes (15, 16) du bâti (1), une fixation de ce support (12).

8. Dispositif selon l'une des revendications 4 et 6, caractérisé en ce qu'il comprend des supports (12, 17, 22, 23) constitués en tôle métallique, emboutie et pliée.

9. Dispositif selon la revendication 6, caractérisé en ce qu'il comprend un dispositif (5) servant à la fois d'axe de pivotement du levier de commande (3) du chariot mobile (7) et de vis d'immobilisation du support fixe (12) assurant une liaison de ce chariot (7) au bâti (1).

10. Appareil caractérisé en ce qu'il comprend un dispositif de roulettes escamotables selon l'une des revendications 1 à 9, monté au-dessous de son bâti (1).

## Patentansprüche

1. Vorrichtung mit versenkbaren Rollen, die einen Rollen tragenden beweglichen Wagen (7) zur Montage mittels angelenkter Halter unter einem Gerät (M) aufweist, der bei seiner Verschiebung in einer Richtung unter der Steuerung durch einen schwenkbaren Hebel (3) ein Einschwenken dieser Rollen bewirkt, so dass das Gerät (M) auf seine festen Füsse zu ruhen kommt, und bei seiner Verschiebung in eine entgegengesetzte Richtung ein Ausschwenken dieser Rollen bewirkt, um das Gerät (M) durch diese Rollen zu stützen, dadurch gekennzeichnet, dass sie Halter (17, 22, 23) aufweist, die an denjenigen ihrer Enden, die ihren am Rollen tragenden Wagen (7) angelenkten Enden entgegengesetzt sind, Vorsprünge (18, 27, 28) aufweisen, die durch eine gelenkige und direkte Verbindung dieses Wagens (7) mit dem Gestell (1) des Geräts (M) eine schwenkbare Montage dieser Halter durch einfaches Einhängen in damit zusammenwirkende Öffnungen (19, 30, 31), die im Gestell (1) des Geräts (M) ausgebildet sind, ermöglichen.

2. Vorrichtung nach Anspruch 1, dadurch gekennzeichnet, dass sie Halter (17, 22, 23) aufweist, welche die Form eines Bügels haben, dessen seitliche Vorsprünge oder Lappen (18, 27, 28) des einen der Enden eine schwenkbare Montage durch einfaches Einhängen in zusammenwirkende Ausklinkungen (19, 30, 31) des Gestells (1) ermöglichen und deren in einer Linie liegende Löcher am anderen Ende eine schwenkbare Montage durch Aufziehen auf die Achse der entsprechenden, vom beweglichen Wagen (7) getragenen Rolle ermöglichen.

3. Vorrichtung nach einem der Ansprüche 1 und 2, dadurch gekennzeichnet, dass sie einen beweglichen Wagen (7) aufweist, der mit drei Rollen ($r_1$, $r_2$, $r_3$) versehen ist, von denen die eine ($r_1$) vorn und die anderen ($r_2$, $r_3$) hinten angeordnet sind, und dass sie drei Halter (17, 22, 23) aufweist, die eine direkte und schwenkbare Verbindung dieses Wagens (7) mit dem Gestell (1) des Gerätes (M) herstellen.

4. Vorrichtung nach Anspruch 2, dadurch gekennzeichnet, dass sie Halter (17, 22, 23) aufweist, die seitliche flache Vorsprünge oder Lappen (18, 27, 28) haben, die mit Ausklinkungen (19, 30, 31) zusammenwirken, die jeweils mit einem im Gestell (1) ausgebildeten langen Einlass mit einer vorbestimmten Änderung von Richtung und Breite ausgebildet sind, wodurch sie eine Montage dieser Halter gemäss der Richtung einer ihrer vorbestimmten Stellungen ermöglichen.

5. Vorrichtung nach einem der Ansprüche 1 bis 3, dadurch gekennzeichnet, dass sie einen beweglichen Wagen (7) aufweist, der die Form eines Y hat, dessen Stamm (26) eine vordere Rolle ($r_1$) und dessen zwei Arme zwei hintere Rollen ($r_2$, $r_3$) tragen.

6. Vorrichtung nach Anspruch 1, abgewandelt in der Weise, dass in einer direkten Verbindung des Wagens (7) mit dem Gestell (1) des Geräts (M) einer (17) der Halter mit schwenkbarer Montage (17, 22, 23) durch einen festen Halter (12) mit schrägen Rampen ersetzt ist.

7. Vorrichtung nach Anspruch 6, dadurch gekennzeichnet, dass sie einen festen Halter (12) aufweist, der an einem seiner Enden zwei Seitenwände mit einem Winkel Teta bezüglich der Senkrechten geneigten Rampen (10, 11) zur Aufnahme der Enden der Achse (9) der vorderen Rolle ($r_1$) und zur Führung von deren Verschiebung gemäss diesem Winkel Teta und am entgegengesetzten Ende zwei Vorsprünge (13, 14) in Form von Haken aufweist, die durch ihr Einhängen in damit zusammenwirkende Öffnungen (15, 16) des Gestells (1) eine Befestigung dieses Halters (12) ermöglichen.

8. Vorrichtung nach einem der Ansprüche 4 und 6, dadurch gekennzeichnet, dass sie Halter (12, 17, 22, 23) aufweist, die aus gezogenem und gebogenem Metallblech bestehen.

9. Vorrichtung nach Anspruch 6, dadurch gekennzeichnet, dass sie eine Vorrichtung (5) aufweist, die gleichzeitig als Schwenkachse des Steuerungshebels (3) des beweglichen Wagens (7) und als Befestigungsschraube des festen Halters (12) dient, indem sie eine Verbindung des Wagens (7) mit dem Gestell (1) herstellt.

10. Gerät, dadurch gekennzeichnet, dass es eine Vorrichtung mit versenkbaren Rollen nach einem der Ansprüche 1 bis 9 unter seinem Gestell (1) montiert aufweist.

## Claims

1. A device including retractable rollers, said device comprising a carriage (7) carrying rollers and adapted to be mounted beneath an apparatus (M) by means of articulated supports, said carriage upon being moved in one direction by means of a pivoting lever (3) causing said rollers to be retracted such that the aparatus (M) comes to rest on its fixed feet, and upon being moved in opposite direction causing said rollers to be extended so as to support the apparatus (M) on said rollers, characterized in that said device comprises support members (17, 22, 23) which at those of their ends opposite to the roller carrying ends pivotally connected to the carriage (7), are provided with projections (18, 27, 28) permitting by means of an articulated and direct coupling of said carriage (7) to the frame (1) of the apparatus (M) pivotal mounting of said support members by simple securing thereof in cooperating apertures (19, 30, 31), which are formed in the frame (1) of the apparatus (M).

2. A device as claimed in claim 1, characterized in that it comprises support members (17, 22, 23) of strap-like configuration, the lateral projections or lugs (18, 27, 28) at one end thereof permitting pivotable mounting by simple securing thereof in cooperating jogs (19, 30, 31) of the frame (1), while the apertures of said support members, which are formed at the respective other end and are in alignment, permit pivotable mounting by fitting onto the axle of the respective roller which is carried by the movalbe carriage (7).

3. A device as claimed in any of the claims 1 and 2, characterized in that it comprises a movable carriage (7) provided with three rollers ($r_1$, $r_2$, $r_3$), one ($r_1$) of said rollers being disposed forwardly and the other ones ($r_2$, $r_3$) being disposed rearwardly, and that it comprises three support members (17, 22, 23) which bring about a direct and pivotable coupling between said carriage (7) and said frame (1) of the apparatus (M).

4. A device as claimed in claim 2, characterized in that it comprises supporting members (17, 22, 23) provided with lateral flat projections or lugs (18, 27, 28) which cooperate with jogs (19, 30, 31) that are respectively provided with an elongated inlet formed in the frame (1) and having a predetermined change of direction and width, whereby they permit assembly of said supporting members in accordance with the direction of one of their predetermined positions.

5. A device as claimed in any of the claims 1 to 3, characterized in that it comprises a movable carriage (7) shaped like a Y, the stem (26) of said Y carrying a forward roller ($r_1$) and the two arms thereof carrying rearward rollers ($r_2$, $r_3$).

6. A device as claimed an claim 1, characterized in that in a direct coupling between the carriage (7) and the frame (1) of the apparatus (M), one (17) of said supporting members with pivotable mounting is replaced by a fixed supporting member (12) with inclined ramps.

7. A device as claimed in claim 6, characterized in that it comprises a fixed supporting member (12) which includes on one of the ends thereof two sidewalls having ramps (10, 11) inclined at an angle $\Theta$ relative to the vertical for receiving the ends of the axle (9) of the forward roller ($r_1$) and for guiding the displacement thereof in accordance with said angle $\Theta$, and which includes at the opposite end two hook-shaped projections (13, 14) which by their insertion into cooperating apertures (15, 16) of the frame (1) permit securing of said supporting member (12).

8. A device as claimed in any of the claims 4 and 6, characterized in that it comprises supporting members (12, 17, 22, 23) which are made of drawn and bent plate.

9. A device as claimed in claim 6, characterized in that it comprises means (5) which functions simultaneously as pivot for the control lever (3) of the movable carriage (7) and as securing bolt for the fixed support member (12) by effecting a coupling between the carriage (7) and the frame (1).

10. Apparatus, characterized in that it comprises a device having retractable rollers according to any of the claims 1 to 9, mounted beneath the frame (1) thereof.

FIG. 1

FIG. 14

FIG. 15

FIG.2

FIG.6

FIG.3

FIG.4

FIG.5

FIG.13

004721O

# Fig.7

FIG. 8

FIG. 9

FIG. 10

FIG. 11

FIG. 12